# EUROPEAN PATENT APPLICATION

(11) **EP 2 579 646 A1**
(43) Date of publication of application: **10.04.2013**
(21) Application number: 11792445.6
(22) Date of filing: 07.06.2011
(51) Int. Cl.: H04W 36/04, H04W 36/08, H04W 36/38, H04W 84/10

(54) **MOBILE COMMUNICATION SYSTEM, WIRELESS CONTROL DEVICE AND MOBILE COMMUNICATION METHOD**

(30) Priority: 07.06.2010 JP 2010130536
(71) Applicant: NTT DoCoMo, Inc., Tokyo 100-6150 (JP)
(72) Inventor: HOSONO, Hiroyuki, Tokyo 100-6150 (JP); TERAYAMA, Takeshi, Tokyo 100-6150 (JP); OKAMOTO, Takeshi, Tokyo 100-6150 (JP)
(74) Representative: HOFFMANN EITLE
(86) International application number: PCT/JP2011/063045
(87) International publication number: WO 2011/155488

(57) **Abstract**

A radio network controller 100 detects a plurality of handover candidate cells set to have the same ScC based on the acquired ScC, and determines as a handover target cell a cell whose correlation between the reception level acquired regularly from mobile station 300 and the radio communication state acquired from the mobile station 300 at handover is the highest among the plurality of handover candidate cells detected.

## Description

### TECHNICAL FIELD

The present invention relates to a mobile communication system, a radio network controller, and a mobile communication method for controlling a handover of a mobile station to a cell formed by a base station managed by a mobile telecommunication carrier or a user receiving a communication service provided by the mobile telecommunication carrier.

### BACKGROUND ART

Mobile communication systems have been required to ensure service qualities in accordance with the contents of communication requests randomly made by mobile stations (users) . Thus, when installing a base station, a mobile telecommunications carrier generally estimates the size of a service area and traffic generated in the service area, and uses means such as simulation to design the installation location and configuration of the base station as well as radio parameters such as a transmission level of a downlink common control channel transmitted from the base station.

Also, in designing such a base station, cell identification information identifying a base station (a cell) is determined. For example, in the case of the W-CDMA system, any of 512 scrambling codes (ScCs) is allocated to the base station. In addition, in the case of the LTE, any of 504 cell IDs (PCIs) is allocated to the base station.

Such cell identification information has a limited number of pieces and is repeatedly used in a mobile communication system, but it is important that the same cell identification information is not allocated in neighboring cells.

Furthermore, recently, small-sized base stations (Home NodeB) installed by users of mobile stations at home or the like have been increased in addition to base stations for public communications installed by the above-described mobile telecommunication carrier. In the case of a small-sized base station, the users are limited and the size of the cell is small compared with the base station for public communications. Thus, an increase in throughput can be expected (see, NON-PATENT DOCUMENT 1)

### PRIOR ART DOCUMENT

### NON-PATENT DOCUMENT

NON-PATENT DOCUMENT 1: 3GPP TS 22.220, Service requirements for Home NodeBs (UMTS) and Home eNodeBs (LTE)

### SUMMARY OF THE INVENTION

A small-sized base station such as a Home NodeB can be freely installed by a user of a mobile station or the like. Thus, the same cell identification information can be used in neighboring cells. In other words, there is a possibility that multiple small-sized base stations set to have the same cell identification information (e.g., ScC) may exist as a handover target from a base station for public communications generally covering a wider area.

In such a case, even when the ScC of a handover target cell is notified from a mobile station, the mobile communication network cannot identify a handover target cell of the mobile station and thus cannot complete the handover.

For this reason, an objective of the invention is to provide a mobile communication system, a radio network controller, and a mobile communication method, which can select a proper handover target cell even when the same cell identification information is set in neighboring cells.

A characteristic of the invention relates to a mobile communication system configured to control a handover of a mobile station (a mobile station 300) to a cell formed by a base station (e.g., a base station 200) managed by a mobile telecommunication carrier or a user receiving a communication service provided by the mobile telecommunication carrier, the mobile communication system including: a neighboring cell information acquisition unit (neighboring cell information acquisition unit 110) configured to acquire neighboring cell information containing cell identification information for identifying a neighboring cell located around a cell formed by the base station and a radio communication state in the mobile station; a handover candidate acquisition unit (handover candidate acquisition unit 120) configured to acquire cell identification information of a handover source cell of the mobile station and cell identification information of a handover candidate cell of the mobile station, and a radio communication state with the handover candidate cell in the mobile station; a detection unit (handover candidate overlap detection unit 140) configured to detect multiple handover candidate cells set to have the same cell identification information based on the cell identification information acquired by the neighboring cell information acquisition unit and the cell identification information acquired by the handover candidate acquisition unit; and a determination unit (handover target determination unit 150) configured to determine as a handover target cell a cell whose correlation between the radio communication state acquired by the neighboring cell information acquisition unit and the radio communication state acquired by the handover candidate acquisition unit is the highest among the multiple handover candidate cells detected by the detection unit.

In the above-described characteristic of the invention, the determination unit may use a reception level of a radio signal received by the mobile station from the neighboring cell as the radio communication state to determine the cell whose correlation between the reception level acquired by the neighboring cell acquisition unit and the reception level acquired by the handover candidate acquisition unit is the highest as a handover target cell.

In the above-described characteristic of the invention, the handover candidate acquisition unit may acquire a radio communication state with a handover source cell in the mobile station and a radio communication state with the handover candidate cell in the mobile station.

In the above-described characteristic of the invention, when a fixed cell having a transmission level of a common control channel fixed and a dynamic cell having a transmission level of the common control channel dynamically changed coexist in neighboring cells, the determination unit may make a correlation of the fixed cell larger than a correlation of the dynamic cell.

### BRIEF DESCRIPTION OF DRAWINGS

[Fig. 1] Fig. 1 is an overall schematic configuration diagram of a mobile communication system according to an embodiment of the present invention.
[Fig. 2] Fig. 2 is an illustration of a basic operation of a handover in the mobile communication system according to the present embodiment of the invention.
[Fig. 3] Fig. 3 is an illustration of a handover operation according to the embodiment of the invention under an environment in which both a base station installed by a mobile telecommunication carrier and a base station (Home NodeB) installed by a user of a communication service provided by the mobile telecommunication carrier are present in a neighboring cell.
[Fig. 4] Fig. 4 is a functional block diagram of a radio network controller 100 according to the embodiment of the invention.
[Fig. 5] Fig. 5 is a drawing showing a sequence inside the mobile communication system in relation to determination of a handover target cell.
[Fig. 6] Fig. 6 is a drawing showing an operational flow of determining a handover target cell by the radio network controller 100.
[Fig. 7] Fig. 7 is a drawing showing one example of a database 500.
[Fig. 8] Fig. 8 is a drawing showing one example of a database 600.
[Fig. 9] Fig. 9 is a drawing showing an example of an operational flow of determining a handover target cell by the radio network controller 100.

### MODES FOR CARRYING OUT THE INVENTION

Hereinafter, an embodiment of the present invention is described. In the following description of the drawings, same or similar reference numerals are given to denote same or similar portions. Note that the drawings are merely schematically shown and proportions of sizes and the like are different from actual ones.

Thus, specific sizes and the like should be judged by referring to the description below. In addition, there are of course included portions where relationships or percentages of sizes of the drawings are different from one another.

### (1) Overall Schematic Configuration of Mobile Communication System

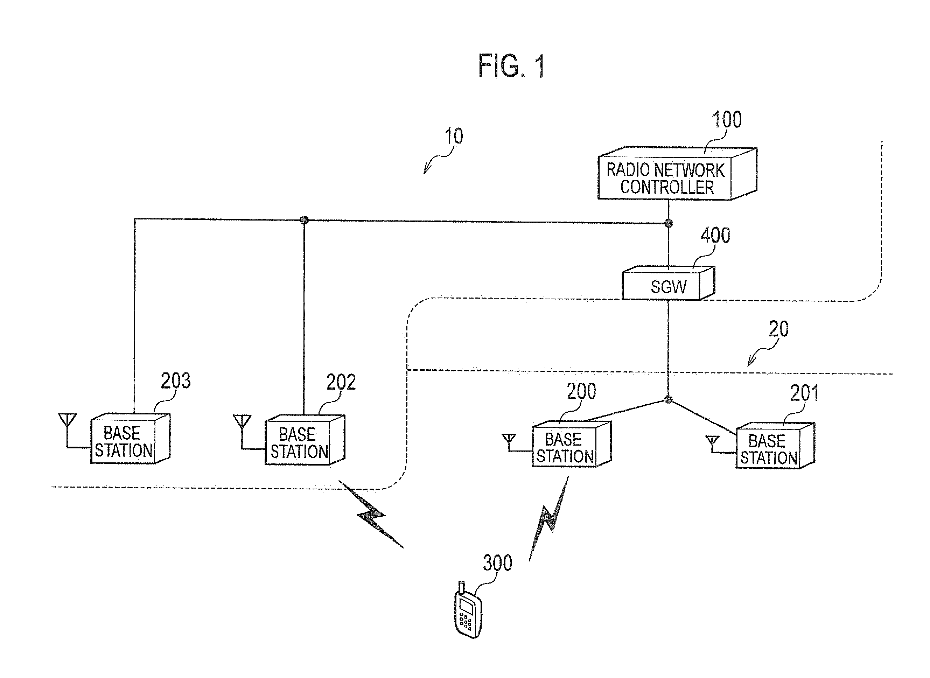

Fig. 1 is an overall schematic configuration diagram of a mobile communication system according to the present embodiment. Specifically, Fig. 1 shows an example of a configuration of a radio access network representative in the mobile communication system.

The mobile communication system shown in Fig. 1 complies with the W-CDMA scheme, and base stations 200 to 203 are communicatively connected to the radio network controller 100. The radio network controller 100 allocates radio parameters required of the base stations 200 to 203 for executing radio communications to the base stations and manages the allocation.

In particular, the mobile communication system according to the embodiment can select a proper handover target even though scrambling codes (ScC) overlap with one another in neighboring cells when the handover of the mobile station 300 to the cell formed by the base station (e.g., the base station 200) installed by the mobile telecommunication carrier or the user of the communication service provided by the mobile telecommunication carrier is controlled.

The base station 200 and the base station 201 are small-sized base stations (Home eNodeB) managed by users of the communication services provided by the mobile telecommunication carrier. The base station 200 and the base station 201 are both installed in the Local Area Network (LAN) managed by the users and are connected to the radio network controller 100 provided on the mobile telecommunication carrier network 10 via the access line carrier network 20 providing FTTH and ADSL.

A Security Gateway (SGW) 400 is installed in a boundary between the mobile telecommunication carrier network 10 and the access line carrier network 20. The SGW 400 is a gateway for protecting the mobile telecommunication carrier network 10 against an unauthorized access from other communication networks. The SGW 400 permits only an access to the proper mobile telecommunication carrier network 10 authenticated by predetermined authentication procedures.

It is assumed in the embodiment that different users respectively have the base station 200 and the base station 201. For this reason, a mobile station of the user managing one of the base stations is not given of a connection permission to the other of the base stations. On the other hand, the base station 202 and the base station 203 are base stations for public communications and are installed on the mobile telecommunication carrier network 10. As long as a user has a mobile station of the mobile telecommunication carrier, the user can be connected to the base station 202 and the base station 203 without particular limitations.

### (2) Summary of Handover Operation

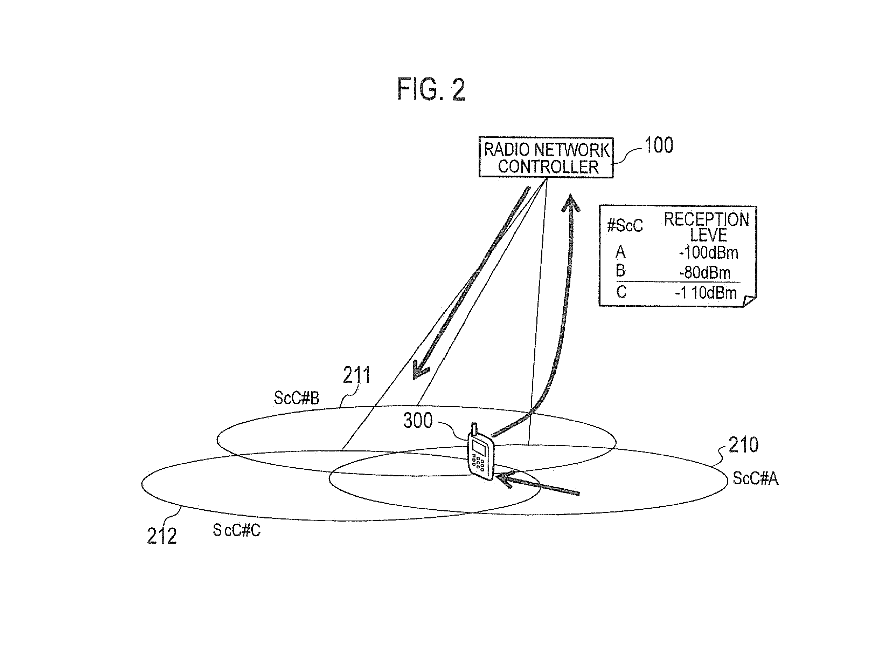

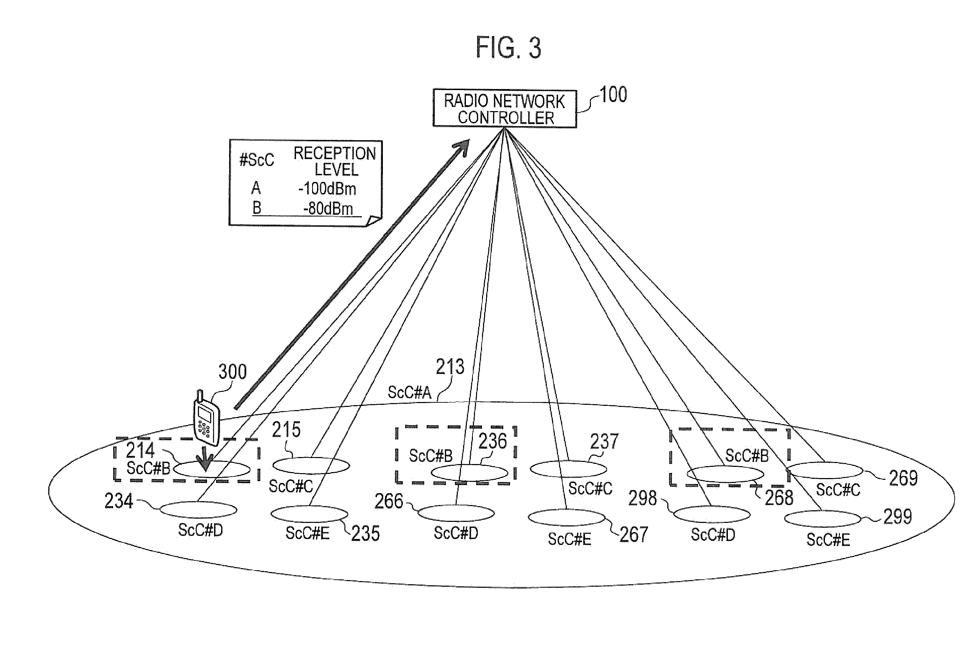

Hereinafter, referring to Figs. 2 and 3, the summary of the handover operation performed by the mobile communication system according to the embodiment is described.

Fig. 2 is an illustration of the basic operation of the handover in the mobile communication system. Fig. 3 is an illustration of the handover operation under an environment in which both a base station installed by a mobile telecommunication carrier and a base station (Home NodeB) installed by a user of a communication service provided by the mobile telecommunication carrier are present in neighboring cells.

As shown in Fig. 2, when a cell 211 and a cell 212 are detected by movement or the like, the mobile station 300 notifies the radio network controller 100 of cell information of the cells 211 and 212 via the cell 210 visiting the cell.

Specifically, the mobile station 300 notifies the radio network controller 100 of ScC#B of the cell 211 and ScC#C of the cell 212 in addition to ScC#A of the cell 210. In addition, the mobile station 300 notifies the radio network controller 100 of the reception level (-80 dBm) of the cell 211 and the reception level (-110 dBm) of the cell 212 in addition to the reception level (-100 dBm) of the cell 210. Note that the "reception level" means a reception level of a common control channel. Note that a shared pilot channel (CPICH) or the like, for example, can be used as a channel for control, which is receivable in the neighboring cell.

Also, there are 512 ScCs in the W-CDMA system, and there is a need to repeatedly use them in the mobile communication system. In general, the mobile telecommunication carrier allocates ScCs different from each other to the neighboring cells (the cells 211, 212) which can be handover candidates of a specific cell (e.g., the cell 210).

Accordingly, the radio network controller 100 can uniquely identify the cells 210 to 212 based on the ScC#A to ScC#C notified from the mobile station 300. In other words, the radio network controller 100 can determine the cell 211 whose reception level of the mobile station 300 is the highest as a handover target cell for the mobile station 300.

On the other hand, as shown in Fig. 3, when there are many extremely small cells formed by the small-sized base stations (Home NodeB) such as cells 214 to cell 299 are present in an area of the large cell 213 formed by the base station for the public communications, the cells 214 to 299 are present as handover candidate cells of the cell 213. However, the number of ScCs has a limitation. Thus, the unique ScC is not always allocated to each cell. In the example shown in Fig. 3, ScC#B to ScC#E are repeatedly used in the cells 214 to the cell 299.

For this reason, even when the ScC#B identifying the handover candidate cell is notified from the cell 213, the ScC#B is also set in cells 236 to 268. Thus, the radio network controller 100 cannot identify the cell 214 which is a handover candidate cell of the mobile station 300.

The mobile communication system according to the embodiment can surely identify the handover candidate cell of the mobile station 300 even under the environment shown in Fig. 3.

### (2) Functional Block Configuration of Radio network controller 100

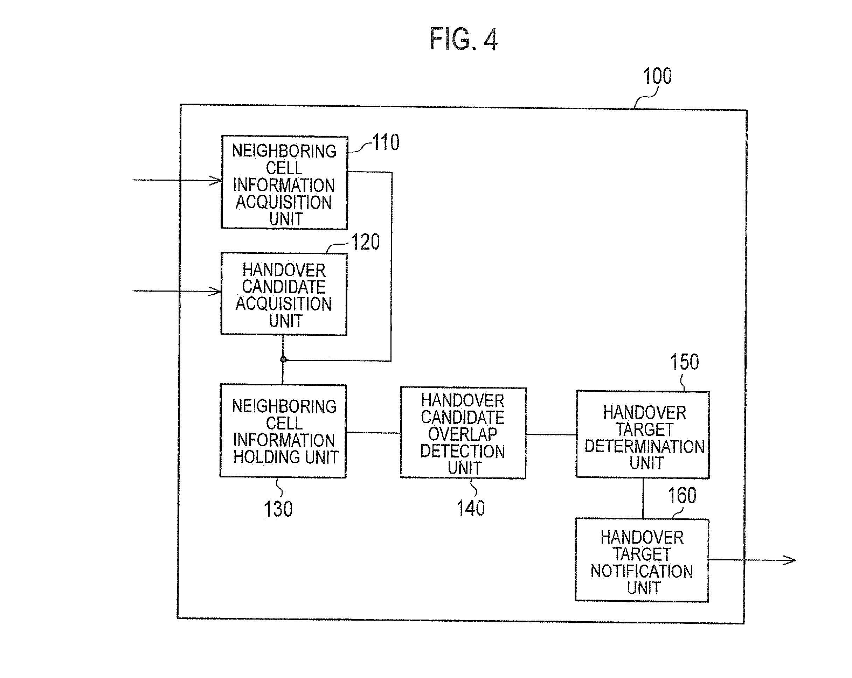

Fig. 4 is a functional block configuration diagram of the radio network controller 100. As shown in Fig. 4, the radio network controller 100 includes a neighboring cell information acquisition unit 110, a handover candidate acquisition unit 120, a neighboring cell information holding unit 130, a handover candidate overlap detection unit 140, a handover target determination unit 150, and a handover target notification unit 160.

The neighboring cell information acquisition unit 110 is configured to acquire neighboring cell information containing ScC (cell identification information) identifying a neighboring cell located around a cell (e.g., cells 213 to 299) formed by each of the base stations. Also, the neighboring cell information acquisition unit 110 is configured to acquire the reception level as the radio communication state in the mobile station 300. The neighboring cell information acquisition unit 110 causes the neighboring cell information holding unit 130 to hold the acquired neighboring cell information and reception level.

The handover candidate acquisition unit 120 is configured to acquire the cell identification information of a handover source cell of the mobile station 300 and the cell identification information of the handover candidate cell of the mobile station 300 from the mobile station 300. Also, the handover candidate acquisition unit 120 acquires the reception level of the handover candidate cell as the radio communication state with the handover candidate cell in the mobile station 300.

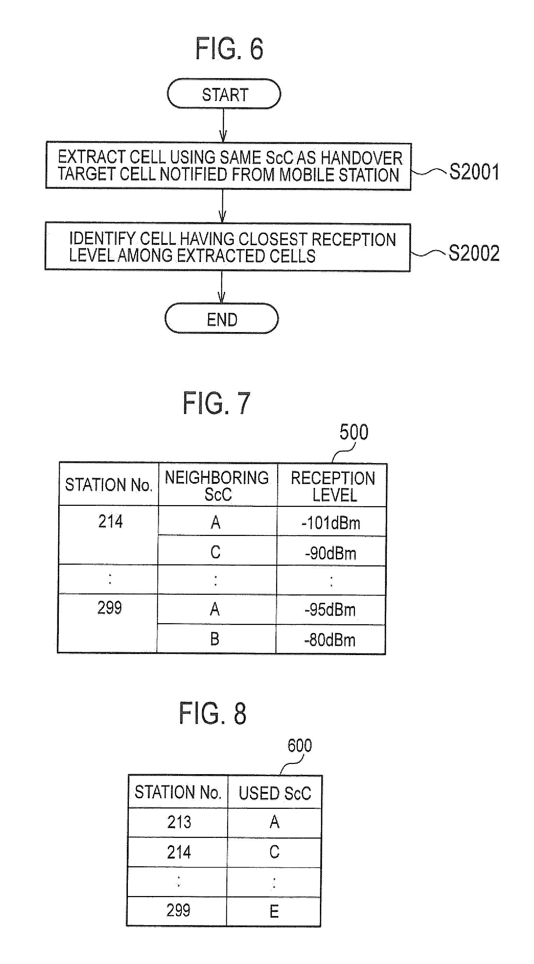

The neighboring cell information holding unit 130 is configured to hold the information acquired by the neighboring cell information acquisition unit 110 and the information acquired by the handover candidate acquisition unit 120. Specifically, the neighboring cell information holding unit 130 holds the information in the format of a database 500 shown in Fig. 7 and the information in the format of a database 600 shown in Fig. 8.

As shown in Fig. 7, the database 500 contains an identifier of the base station (cell), ScC of the neighboring cell of the base station (cell identification information), and the reception level of the neighboring cell. Also, as shown in Fig. 8, the database 600 contains the identifier of the base station (cell) and the ScC set in the cell.

The handover candidate overlap detection unit 140 is configured to detect multiple handover candidate cells set to have the same ScC based on the ScC acquired by the neighboring cell information acquisition unit 110 and the ScC acquired by the handover candidate unit 120. A specific operation of the handover candidate overlap detection unit 140 is described later.

The handover target determination unit 150 is configured to determine as a handover determination cell the handover candidate cell whose correlation between the radio communication state acquired by the neighboring cell information acquisition unit 110 and the radio communication state acquired by the handover candidate acquisition unit 120 is the highest among the multiple handover candidate cells detected by the handover candidate overlap detection unit 140.

Specifically, the handover target determination unit 150 determines the cell whose correlation between the reception level acquired by the neighboring cell acquisition unit 110 and the reception level acquired by the handover candidate acquisition unit 120 is the highest as a handover target cell by using the reception level of a radio signal received by the mobile station 300 from the neighboring cell as the radio communication state. Note that a specific operation of the handover target determination unit 150 is described later.

The handover target notification unit 160 is configured to transmit the handover target cell determined by the handover target determination unit 150 to the mobile station 300.

### (3) Operation of Mobile Communication System

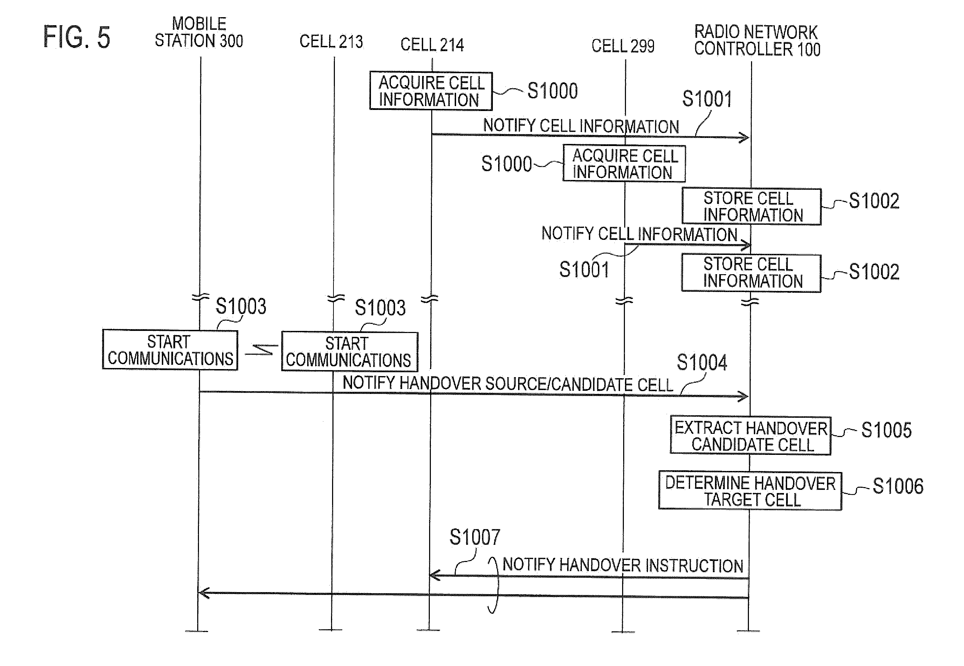

Hereinafter, described is an operation of the mobile communication system, specifically, an operation of determining by the radio network controller 100 a handover target cell. Fig. 5 shows a sequence inside the mobile communication system in relation to the determination of the handover target cell.

As shown in Fig. 5, the cells 214 to 299 formed by the small-sized base stations (Home NodeB) periodically acquire ScC and reception level of the neighboring cell (step S1000).

The cells 214 to 299 notify the radio network controller 100 of the acquired ScC and reception level of the neighboring cell (step S1001). Note that the cells 214 to 299 may measure the neighboring cell at a synchronized timing or asynchronous timing.

The radio network controller 100 holds the ScC and reception level of the neighboring cell which are notified from the cells 214 to 299 for each cell. Specifically, the radio network controller 100 holds the ScC and reception level of the neighboring cell according to the formats of the database 500 and the data base 600 shown in Fig. 7 (step S1002).

The mobile station 300 then starts communications with the cell 213 formed by the base station for public communications. Here, these is described an example in which the mobile station 300 performs a handover to the cell 214 formed by the Home NodeB.

The mobile station 300 notifies the radio network controller 100 of ScC and reception level (cell information) of the cell 213 in communications and the cell 214 being the handover candidate cell (step S1004). In this manner, the radio network controller 100 acquires the reception level of the handover source cell (the cell 213) of the mobile station 300 and the reception level of the handover candidate cell (the cell 214) in the mobile station 300 based on the information notified from the mobile station 300.

The radio network controller 100 detects multiple handover candidate cells set to have the same ScC based on the ScC acquired at step S1002 and the ScC acquired at step S1004 (step S1005). Here, the cell 236 and the cell 268 (see Fig. 3) are detected as cells set to have the ScC same as that of the cell 214. Note that a method of detecting the multiple handover candidate cells set to have the same ScC is described later.

Among the detected handover candidate cells, the radio network controller 100 refers to the database 500 and determines the cell in which the ScC same as the ScC of the cell 213 being the handover source cell is allocated and which has the reception level nearest with the reception level of the cell 213 as a handover target cell , that is, the radio network controller 100 determines the cell whose correlation of the radio communication state is the highest as a handover target cell (step S1006). It is assumed here that the cell 214 is determined as a handover target cell.

The radio network controller 100 notifies the cell 214 determined as the handover target cell and the mobile station 300 of a handover instruction (step S1007).

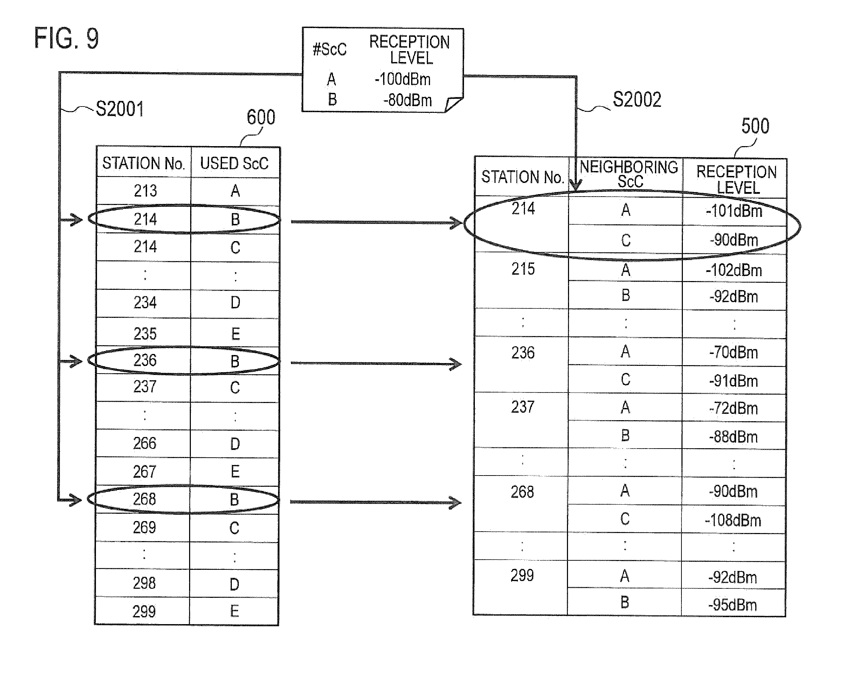

Fig. 6 is a drawing showing an operational flow of determining a handover target cell by the radio network controller 100. In addition, Fig. 9 is a drawing showing an operational example of determining a handover target cell by the radio network controller 100.

As shown in Figs. 6 and 9, the radio network controller 100 refers to the database 600 and extracts the cells 236 and 268 set to have the same ScC (ScC#B) as the cell 214 based on the cell information of the handover source cell (the cell 213) and the handover target cell (the cell 214), which is notified from the mobile station 300 (step S2001).

Hereinafter, the radio network controller 100 refers to the database 500 and identifies the cell 214 having the reception level (-101 dBm) closest to a value (-100 dBm) of the reception level of the cell 213 reported from the mobile station 300 among the cell 214, the cell 236, and the cell 268 (step S2002).

### (4) Advantageous Effects

According to the radio network controller 100 according to the above-described embodiment, among multiple handover candidate cells (the cell 214, cell 236, and the cell 268) set to have the same ScC, the handover candidate cell whose correlation between the reception level periodically acquired by the neighboring cell information acquisition unit 110 and the reception level acquired when the handover is request by the handover candidate acquisition unit 120 is the highest as a handover target cell.

For this reason, even when the same ScC is set in the neighboring cells, the radio network controller 100 can surely identify a proper cell as a handover target cell of the mobile station 300 and can achieve a proper handover of the mobile station 300 even under the environment where many small-sized base stations such as the Home eNodeB are installed.

In the embodiment, the reception level of a radio signal received by the mobile station 300 from the neighboring cell is used as the radio communication state used for determination of the correlation. Accordingly, the correlation relationship can be determined without greatly increasing the processing load in the radio network controller 100.

### (5) Modification

In the above-described embodiment, the description is given of the case where the transmission level of the common control channel is fixed. However, when both a fixed cell in which the transmission level of the common control channel is fixed and a dynamic cell in which the transmission level is dynamically changed are present in the neighboring cell, the handover target determination unit 150 may make the correlation of the fixed cell larger than the correlation of the dynamic cell. This can reduce the possibility of wrongly identifying the handover target cell.

Also, instead of acquiring only the radio communication state (the reception level) with the handover candidate cell in the mobile station 300, the handover candidate acquisition unit 120 may acquire both the radio communication state with the handover source cell and the radio communication state with the handover candidate cell in the mobile station 300. Furthermore, the radio communication state used for determining the correlation is not limited to the reception level of the common control channel, but, for example, a ratio of chip power to noise power (Ec/No) or round-trip delay time (Round Trip Time) may be used.

### (6) Other Embodiments

As described above, the contents of the present invention has been disclosed through the above-described embodiments. However, it should not be understood that the description and the drawings, which constitute one part of this disclosure, are to limit the present invention. Various alternative embodiments will be obvious for those who are in the art from this disclosure.

For example, the above-described embodiment describes the mobile communication system complying with the W-CDMA scheme as an example. However, in the case of the LTE (Long Term Evolution) as the next generation of the W-CDMA, 504 cell IDs (PCI) may be redundantly set as similar to ScC in the neighboring cell. The invention can of course be applied to such a case.

Also, in the case of the LTE system, the base station may include functions of the radio network controller 100. Specifically, the base station may include functions of the neighboring cell information acquisition unit 110, handover candidate acquisition unit 120, neighboring cell information holding unit 130, handover candidate overlap detection unit 140, handover target determination unit 150, and handover target notification unit 160. Note that the base stations within the mobile communication system may alternately share the radio communication state acquired by each of the base stations.

Furthermore, among the functional blocks of the radio network controller 100, one part of the functions may be executed in the base station.

It is natural that the present invention include various embodiments which are not described herein. Accordingly, the technical scope of the present invention is defined only by particular matters of the invention according to the scope of claims appropriate from the above description.

Note that the contents of Japanese Patent Application Publication No. 2010-130536 (filed on June 7, 2010) are hereby incorporated by reference in their entirety.

### INDUSTRIAL APPLICABILITY

The characteristics of the invention can provide a mobile communication system, a radio network controller, and a mobile communication method, which can select a proper handover target cell even when the same cell identification information is set in neighboring cells.

### EXPLANATION OF THE REFERENCE NUMERALS

- 10: mobile telecommunication carrier network
- 20: access line carrier network
- 100: radio network controller
- 110: neighboring cell information acquisition unit
- 120: handover candidate acquisition unit
- 130: neighboring cell information holding unit
- 140: handover candidate overlap detection unit
- 150: handover target determination unit
- 160: handover target notification unit
- 200 to 203: base station
- 210 to 299: cell
- 300: mobile station
- 400: SGW
- 500, 600: database

## Claims

1. A mobile communication system configured to control a handover of a mobile station to a cell formed by a base station managed by a mobile telecommunication carrier or a user receiving a communication service provided by the mobile telecommunication carrier, the mobile communication system comprising:
a neighboring cell information acquisition unit configured to acquire a neighboring cell information containing cell identification information for identifying a neighboring cell located around a cell formed by the base station and a radio communication state in the mobile station;
a handover candidate acquisition unit configured to acquire cell identification information of a handover source cell of the mobile station, cell identification information of a handover candidate cell of the mobile station, and a radio communication state with the handover candidate cell in the mobile station;
a detection unit configured to detect a plurality of handover candidate cells set to have the same cell identification information based on the cell identification information acquired by the neighboring cell information acquisition unit and the cell identification information acquired by the handover candidate acquisition unit; and
a determination unit configured to determine as a handover target cell a cell whose correlation between the radio communication state acquired by the neighboring cell information acquisition unit and the radio communication state acquired by the handover candidate acquisition unit is the highest among the plurality of handover candidate cells detected by the detection unit.

2. The mobile communication system according to claim 1, wherein the determination unit uses a reception level of a radio signal received by the mobile station from the neighboring cell as the radio communication state to determine as a handover target cell the cell whose correlation between the reception level acquired by the neighboring cell acquisition unit and the reception level acquired by the handover candidate acquisition unit is the highest.

3. The mobile communication system according to claim 1, wherein the handover candidate acquisition unit acquires a radio communication state with a handover source cell in the mobile station and a radio communication state with the handover candidate cell in the mobile station.

4. In the mobile communication system according to claim 1, wherein when a fixed cell having a transmission level of a common control channel fixed and a dynamic cell having a transmission level of the common control channel dynamically changed coexist in neighboring cells, the determination unit makes a correlation of the fixed cell larger than a correlation of the dynamic cell.

5. A radio network controller configured to control a handover of a mobile station to a cell formed by a base station managed by a mobile telecommunication carrier or a user receiving a communication service provided by the mobile telecommunication carrier, the radio network controller comprising:
a neighboring cell information acquisition unit configured to acquire neighboring cell information containing cell identification information for identifying a neighboring cell located around a cell formed by the base station;
a handover candidate acquisition unit configured to acquire cell identification information of a handover source cell of the mobile station, cell identification information of a handover candidate cell of the mobile station, and a radio communication state with the handover candidate cell in the mobile station;
a detection unit configured to detect a plurality of handover candidate cells set to have the same cell identification information based on the cell identification information acquired by the neighboring cell information acquisition unit and the cell identification information acquired by the handover candidate acquisition unit; and
a determination unit configured to determine as a handover target cell a cell whose correlation between the radio communication state acquired by the neighboring cell information acquisition unit and the radio communication state acquired by the handover candidate acquisition unit is the highest among the plurality of handover candidate cells detected by the detection unit.

6. A mobile communication method for controlling a handover of a mobile station to a cell formed by a base station managed by a mobile telecommunication carrier or a user receiving a communication service provided by the mobile telecommunication carrier, the mobile communication system comprising:
a first acquiring step of acquiring neighboring cell information containing cell identification information for identifying a neighboring cell located around a cell formed by the base station and a radio communication state in the mobile station;
a second acquisition step of acquiring cell identification information of a handover source cell of the mobile station, cell identification information of a handover candidate cell of the mobile station, and a radio communication state of the handover candidate cell in the mobile station;
a detection step of detecting a plurality of handover candidate cells set to have the same cell identification information based on the acquired cell identification information and the cell identification information acquired by the second acquisition step; and
a determination step of determining as a handover target cell a cell whose correlation between the radio communication state acquired at the first acquisition step and the radio communication state acquired at the second acquisition step is the highest among the plurality of detected handover candidate cells.
